# EUROPEAN PATENT APPLICATION

(11) **EP 3 352 445 A1**
(43) Date of publication of application: **25.07.2018**
(21) Application number: 16845911.3
(22) Date of filing: 05.09.2016
(51) Int. Cl.: H04N 5/225, G02B 7/02, G03B 17/02, H04N 5/232

(54) **IMAGING DEVICE**

(30) Priority: 18.09.2015 JP 2015185734
(71) Applicant: Panasonic Intellectual Property Management Co., Ltd., Osaka-shi, Osaka 540-6207 (JP)
(72) Inventor: YOKOTA, Hirosi, Osaka-shi, Osaka 540-6207 (JP); ONISHI, Katsunori, Osaka-shi, Osaka 540-6207 (JP); AOYAMA, Keiiti, Osaka-shi, Osaka 540-6207 (JP)
(74) Representative: Appelt, Christian W.
(86) International application number: PCT/JP2016/004036
(87) International publication number: WO 2017/047034

(57) **Abstract**

It is an object of the present invention to reduce a time required to adjust the location of an optical lens. An imaging device includes a substrate (2), an imaging element (51), a lens unit (52), and a holder (53). The lens unit (52) includes one or more optical lenses (521) configured to concentrate rays of light onto a light receiving surface (51a) of the imaging element (51). The holder (53) is fixed to the substrate (2) and holds the lens unit (52) with the one or more optical lenses (521) facing the light receiving surface (51a). The lens unit (52) includes a gear (52f). The lens unit (52) is configured to change a location of the lens unit (52) along the optical axis direction of the one or more optical lenses (521) with respect to the imaging element (51) as the gear (52f) rotates. The holder (53) integrally includes a rib (53e) having a protrusion (53f) which engages with the gear (52f) to restrict rotation of the gear (52f).

## Description

### Technical Field

The present invention relates to an imaging device.

### Background Art

A lens-integrated imaging device, typically a charge-coupled device (CCD) image sensor including solid state imaging devices is known. Such an imaging device is configured to form an optical image of an object captured through an optical lens onto an imaging surface (light receiving surface) of an imaging chip (imaging element) and to convert an optical signal into an electric signal so as to output a desired image signal.

Such an imaging device has to adjust the location of the optical lens to position an imaging surface of the imaging chip at a focal point location of the optical lens. In the lens-integrated imaging device described in Patent Literature 1, a lens holder including an optical lens is moved and adjusted with respect to a package provided with the imaging chip to form an optical image from an optical axis adjustment pattern onto an imaging surface of an imaging chip. Then, the lens holder at a location after the adjustment and the package are fixed to each other with an adhesive agent.

However, in the known example, an adhesive agent is used to fix the lens holder to the package after the adjustment, and therefore, it takes time until the adhesive agent cures, and a long time is required to adjust the location of the optical lens.

### Citation List

### Patent Literature

Patent Literature 1: JP 2005-57261 A

### Summary of Invention

In view of the foregoing, it is an object of the present invention to reduce a time required to adjust the location of an optical lens.

An imaging device according to one aspect of the present invention includes a substrate, an imaging element, a lens unit, and a holder. The imaging element is mounted on the substrate and is configured to convert an optical image formed on a light receiving surface of the imaging element into an electric signal. The lens unit includes an optical lens configured to concentrate rays of light onto the light receiving surface. The holder is fixed to the substrate and holds the lens unit with the optical lens facing the light receiving surface. The lens unit includes a second screw structure and a gear. The second screw structure is engaged with a first screw structure of the holder and is disposed with an axial direction of the second screw structure coinciding with an optical axis direction of the optical lens. The gear is configured to rotate along a flat surface orthogonal to the axial direction to change a location of the second screw structure with respect to the first screw structure. The lens unit is configured to change a location of the lens unit along the optical axis direction with respect to the imaging element as the gear rotates. The holder integrally includes a rib having a protrusion which engages with the gear to restrict rotation of the gear.

### Brief Description of Drawings

FIG. 1A is a plan view from the anterior side of an imaging unit and a substrate in an imaging device of an embodiment of the present invention, and FIG. 1B is an enlarged view of a part of the imaging unit in the imaging device of the embodiment of the present invention;
FIG. 2 is an exploded perspective view of the imaging unit and the substrate in the imaging device of the embodiment;
FIG. 3 is a sectional view of the imaging unit and the substrate in the imaging device of the embodiment;
FIG. 4 is a perspective view of the imaging unit and the substrate in the imaging device of the embodiment;
FIG. 5 is an enlarged sectional view of a part of the imaging unit in the imaging device of the embodiment;
FIG. 6 is an exploded perspective view of the imaging device of the embodiment;
FIG. 7 is a front view of the imaging device of the embodiment;
FIG. 8 is a sectional view taken along line XI-X2 of FIG. 7;
FIG. 9 is a sectional view taken along line X3-X4 of FIG. 7;
FIG. 10 is an exploded perspective view of an imaging unit and a substrate of a comparative example;
FIG. 11 is a perspective view of the imaging unit and the substrate of the comparative example;
FIG. 12 is a block diagram of an imaging element, an actuator, and a gear in the imaging device of the embodiment;
FIG. 13 is a perspective view from the anterior side of the imaging device and a holder member of the embodiment; and
FIG. 14 is a perspective view from the posterior side of the imaging device and the holder member of the embodiment.

### Description of Embodiments

The present embodiment relates to an imaging device A1. Specifically, the present embodiment relates to an optical-lens-integrated imaging device A1.

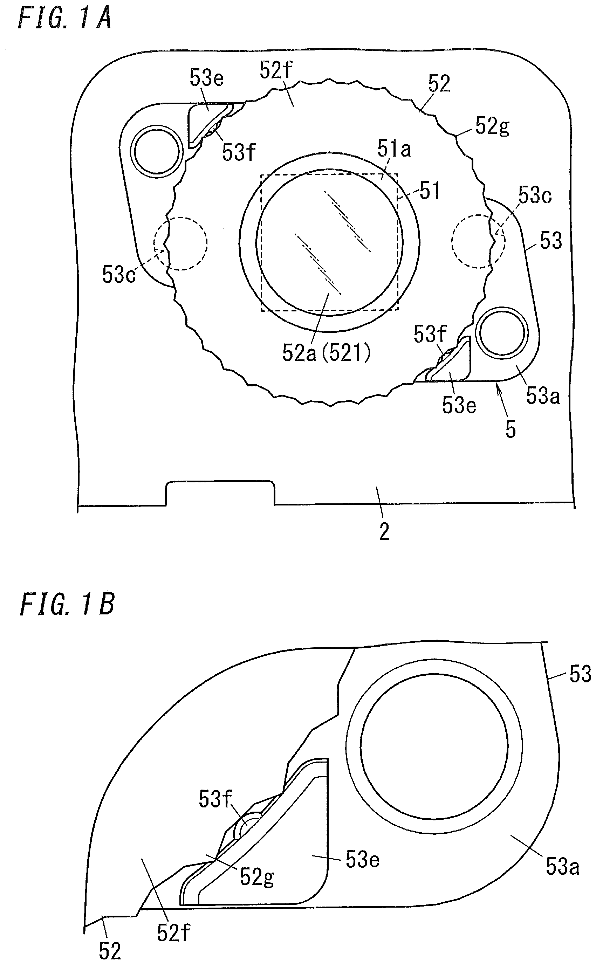

As illustrated in FIGS. 1A, 1B, 2 to 6, the imaging device A1 of the present embodiment includes a substrate 2, an imaging element 51, a lens unit 52, and a holder 53. The imaging element 51 is mounted on the substrate 2 and is configured to convert an optical image formed on a light receiving surface 51a of the imaging element 51 into an electric signal. The lens unit 52 includes one or more optical lenses 521 (in this embodiment, convex lenses 52a and 52b and a concave lens 52c) configured to concentrate rays of light onto the light receiving surface 51a. The holder 53 is fixed to the substrate 2 and holds the lens unit 52 with the optical lenses 521 facing the light receiving surface 51a.

The lens unit 52 includes a bolt thread (second screw structure) 52e and a gear 52f. The bolt thread 52e is engaged with a nut thread (first screw structure) 53d of the holder and is disposed with the axial direction of the bolt thread 52e coinciding with an optical axis direction of the optical lenses 521. The gear 52f is integrated with the bolt thread 52e and is configured to rotate along a flat surface orthogonal to the axial direction of the bolt thread 52e to change the location of the bolt thread 52e with respect to the nut thread 53d.

The lens unit 52 is configured to change the location of the lens unit 52 along the optical axis direction with respect to the imaging element 51 as the gear 52f rotates. The holder 53 integrally includes ribs 53e having protrusions 53f which engage with the gear 52f to restrict rotation of the gear 52f.

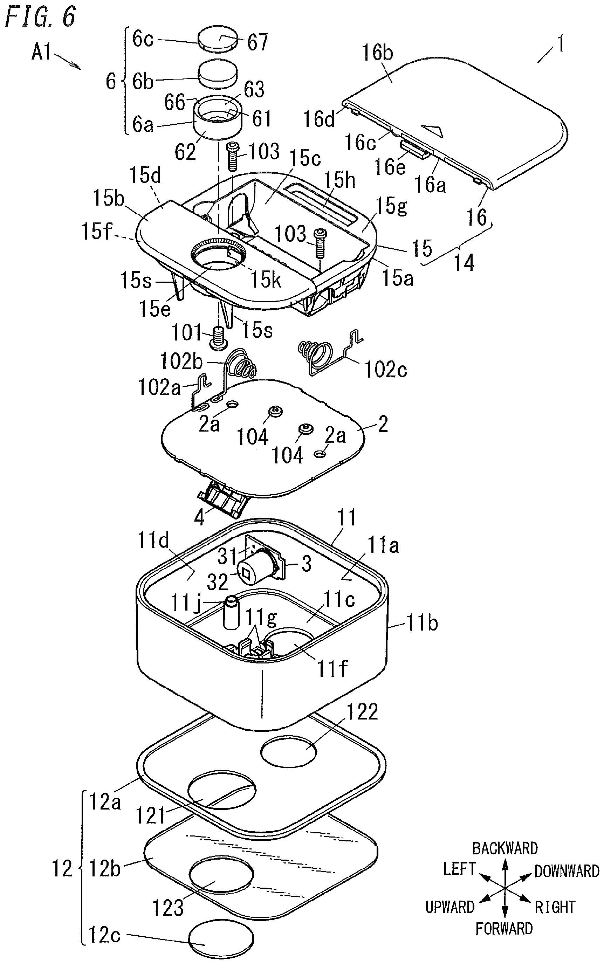

The imaging device A1 of the present embodiment will be described in detail below. Note that the configuration described below is a mere example of the present invention. The present invention is not limited to the following embodiment. Embodiments other than the following embodiment may be accordingly modified depending on design and the like within the scope of the technical idea of the present invention. Note that in the following description, the upward and downward direction, the right and left direction, and the forward and rearward direction are defined as indicated by the arrows in FIG. 6. The arrows in FIG. 6 indicate directions and have no entity.

As illustrated in FIG. 6, the imaging device A1 of the present embodiment includes a housing 1 having a rectangular box shape. The imaging device A1 includes the substrate 2, a sensor unit 3, a mirror 4, and a magnet unit 6 which are accommodated in the housing 1. On the substrate 2, an imaging unit 5, a control circuit, a wireless communication circuit, an antenna, and the like are mounted. The imaging device A1 of the present embodiment operates with power supplied from a battery.

The imaging device A1 of the present embodiment detects an object (a person in the present embodiment) by the sensor unit 3 and captures an image by the imaging unit 5. The imaging device A1 of the present embodiment has a function of transmitting image data of an image captured by the imaging unit 5 by a wireless signal via the antenna.

The imaging device A1 is used for care service for, for example, elderly people and/or children. The imaging device A1 is installed in a residence or a room of an elderly person or a child, and data of a captured image to a smartphone, mobile phone, tablet terminal, or personal computer of the family of the elderly person or the child or to a server managed by a business operator of the care service. In this way, the family or the business operator of the care service can grasp activities and/or conditions of the elderly person or the child.

Note that the specification of wireless communication used by the imaging device A1 of the present embodiment may be accordingly selected from a wireless local area network (LAN), Bluetooth (registered trademark), and the like. The specification of the wireless communication is not limited.

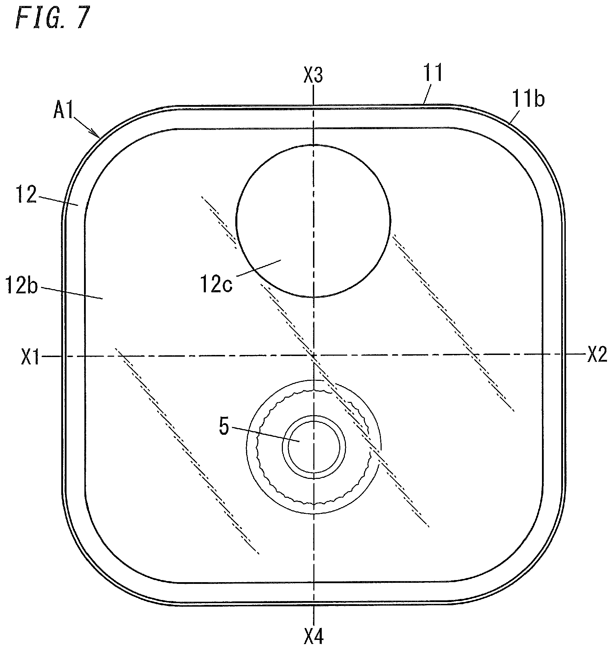

With reference to FIGS. 6 to 9, components of the imaging device A1 of the present embodiment will be described below.

As illustrated in FIG. 6, the housing 1 includes a case body 11, a front surface cover 12, and a rear surface cover 14 which are combined with each other.

The case body 11 is formed by two-color molding. Specifically, the case body 11 has a core member 11a made of polycarbonate and an elastic member 11b made of polyester-based elastomer and covering a part of an outer surface of the core member 11a. The core member 11a includes a front wall 11c and a sidewall 11d. The front wall 11c has a rectangular shape. The sidewall 11d extends rearward from an outer periphery of the front wall 11c. The core member 11a has the shape of a rectangular box with a rear surface opening. The sidewall 11d has an outer surface covered with the elastic member 11b. The elastic member 11b has a rear end located beyond the rear end of the sidewall 11d in the rearward direction. That is, the rear surface opening of the case body 11 has a peripheral edge on an inner side of which the rear end of the core member 11a is located and on an outer side of which the rear end of the elastic member 11b is located, wherein the rear end of the elastic member 11b extends beyond the rear end of the core member 11a, thereby forming a step.

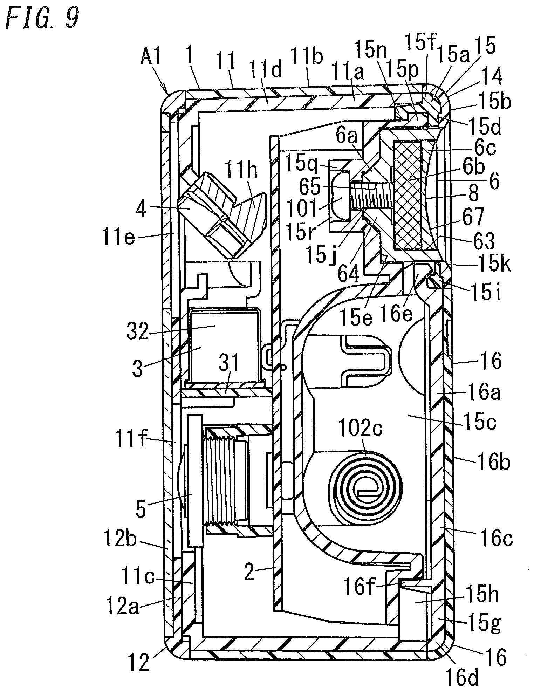

Moreover, the front wall 11c of the core member 11a has an upper part in which an opening 11e (see FIG. 9) having a circular shape is formed, and the front wall 11c has a lower part in which an opening 11f having a circular shape is formed. The front surface cover 12 is attached to the front wall 11c of the core member 11a.

The front surface cover 12 includes a cover body 12a, a light transmissive cover 12b, and an infrared filter 12c. The cover body 12a has a rectangular plate shape. The cover body 12a is attached to the front surface of the case body 11 with the rear surface of the cover body 12a facing the front wall 11c. The cover body 12a has circular openings 121 and 122 respectively facing the openings 11e and 11f of the core member 11a. The light transmissive cover 12b is light transmissive. The light transmissive cover 12b has an opening 123 having a circular shape and facing the opening 121. The light transmissive cover 12b is attached to the front surface of the cover body 12a. The infrared filter 12c having a disk shape is fitted in the opening 123. The infrared filter 12c is made of, for example, polyethylene which allows infrared rays to pass through. The infrared filter 12c allows only light in the wavelength band of the infrared rays to pass through.

The rear surface cover 14 is attached to the rear surface of the case body 11. The rear surface cover 14 includes a cover body 15 and a battery cover 16 which are combined with each other. The cover body 15 has a rectangular box shape.

The cover body 15 is formed by two-color molding. Specifically, the cover body 15 includes a core member 15a made of polycarbonate and an elastic member 15b made of polyester-based elastomer and covering a part of an outer surface of the core member 15a. The core member 15a has the shape of a rectangular box having a battery accommodation section 15c. The battery accommodation section 15c is a recess having the shape of a rectangular parallelepiped. Moreover, an extended part 15d having a flat plate shape is located on an upper side of the battery accommodation section 15c. The extended part 15d has a magnet accommodation section 15e which is a cylindrical recess. The extended part 15d has an upper end including a locking piece 15n (see FIG. 9) which is formed forward to have an L shape. The magnet accommodation section 15e has an outer periphery including a locking pawl 15p (see FIG. 9) engaging with the locking piece 15n.

The extended part 15d has the upper end and both right and left ends from which a peripheral wall 15f having a curved surface extends forward. The rear surface of the extended part 15d and the outer surface of the peripheral wall 15f are covered with the elastic member 15b. The elastic member 15b has a front end extending forward beyond the front end of the peripheral wall 15f. That is, the extended part 15d has an upper peripheral edge and both right and left peripheral edges on an inner side of which the front end of the core member 15a is located and on an outer side of which the front end of the elastic member 15b is located, wherein the front end of the elastic member 15b extends beyond the front end of the core member 15a, thereby forming a step. On the lower side of the battery accommodation section 15c, an extended part 15g having a flat plate shape is provided. The extended part 15g has a recess 15h having the shape of a rectangular parallelepiped.

Moreover, the battery cover 16 is also formed by two-color molding. Specifically, the battery cover 16 includes a core member 16a made of polycarbonate and an elastic member 16b made of polyester-based elastomer and covering a part of an outer surface of the core member 16a. The core member 16a has a rectangular plate shape including a rectangular rear wall 16c and a peripheral wall 16d extending forward from the lower end and both the right and left end of the rear wall 16c. The rear surface of the rear wall 16c and the outer surface of the peripheral wall 16d are covered with the elastic member 16b. The elastic member 16b has a front end extending forward beyond the front end of the peripheral wall 16d. That is, the battery cover 16 has a lower peripheral edge and both right and left peripheral edges on an inner side of which the front end of the core member 16a is located and on an outer side of which the front end of the elastic member 16b is located, wherein the front end of the elastic member 16b extends beyond the front end of the core member 16a, thereby forming a step.

The battery cover 16 is attached to the cover body 15 to cover the battery accommodation section 15c. That is, the battery cover 16 is slid from the bottom to the top with the battery cover 16 facing the battery accommodation section 15c. In this way, a locking piece 16e having an L shape and disposed at the center of the upper end of the battery cover 16 is locked by a locking pawl 15i (see FIG. 9) provided at a lower end of the extended part 15d, thereby attaching the battery cover 16 to the cover body 15. Moreover, the rear wall 16c of the battery cover 16 has a front surface including a plate-like wall housing 16f (see FIG. 9) along the right and left direction. To attach the battery cover 16 to the cover body 15, the wall housing 16f is fitted into a recess 15h (see FIG. 9).

Alternatively, an area around the center of the upper end of the battery cover 16 is pushed by a finger or the like to release the locking piece 16e from the locking pawl 15i, and then, the battery cover 16 is slid downward, which enables the battery cover 16 to be detached from the cover body 15.

The battery accommodation section 15c is a space in which a battery is to be accommodated. At one end in the longitudinal direction of the battery accommodation section 15c, electrode springs 102a and 102b which are to come into contact with electrodes of batteries are located, and at the other end in the longitudinal direction of the battery accommodation section 15c, an electrode spring 102c which is to come into contact with electrodes of the batteries are located. In the imaging device A1 of the present embodiment, two AA batteries are used, but D batteries, C batteries, AAA batteries, or the like may be used. Alternatively, in the imaging device A1 of the present embodiment, one battery or three or more batteries may be used.

The magnet accommodation section 15e of the cover body 15 accommodates the magnet unit 6. The magnet unit 6 includes a yoke (magnet holder) 6a, a magnet 6b, and a magnet cover 6c. The yoke 6a has the shape of a cylinder one end (front end surface) of which is closed. The yoke 6a includes a circular bottom part 61 and a peripheral wall 62 extending rearward from the circumferential edge of the bottom part 61. The yoke 6a further has a columnar recess 63. The bottom part 61 has a front surface including a boss 64 (see FIG. 9). The boss 64 has a screw hole 65 extending along the forward and rearward direction at the center of the boss 64 (see FIG. 9). The recess 63 has a bottom surface on which the magnet 6b (e.g., neodymium magnet) having a disk shape is disposed. The magnet 6b is sandwiched between the bottom surface of the recess 63 and the magnet cover 6c having a disk shape. The recess 63 has an inner diameter slightly larger than the outer diameter of the magnet 6b. The magnet 6b has a front surface and a side surface facing the yoke 6a and surrounded by the yoke 6a. That is, the magnet 6b is surrounded by the yoke 6a except for the rear surface of the magnet 6b. The magnet cover 6c is an elastic member made of polyester-based elastomer and is fixed to the opening edge of the recess 63 by adhesion. The magnet unit 6 has a rear end surface from which an edge 66 of the peripheral wall 62 of the yoke 6a is annularly exposed. The magnet cover 6c having a disk shape is disposed on the inner circumferential side of the edge 66. Note that the magnet cover 6c is provided to protect the magnet 6b. The magnet cover 6c may be omitted.

As illustrated in FIG. 9, the magnet accommodation section 15e of the cover body 15 has a front surface including a boss 15q. The boss 15q has an end (front end) having a recess 15r. The recess 15r has a bottom surface having a through hole 15j formed along the axial direction of the boss 15q. A screw 101 is screwed into the screw hole 65 of the yoke 6a with the screw 101 inserted through the through hole 15j from the front. The magnet unit 6 is fixed to the magnet accommodation section 15e of the cover body 15 with a tip of the screw 101 touching the front surface of the magnet 6b.

The magnet accommodation section 15e of the cover body 15 has an opening edge 15k covered with the elastic member 15b. The opening edge 15k is formed as a concave surface that is inclined forward and curved inward to the center of the magnet accommodation section 15e. The edge 66 of the peripheral wall 62 of the yoke 6a is also formed as a concave surface that is inclined forward and curved inward to the center of the recess 63. The magnet cover 6c has a rear surface 67 formed as a curved surface. The opening edge 15k, the edge 66 of the peripheral wall 62, and the rear surface 67 (a surface exposed rearward from the magnet accommodation section 15e) of the magnet cover 6c form a recess 8 as one continuous curved surface. The peripheral edge of an inner surface of the recess 8 is the opening edge 15k. That is, the peripheral edge of the inner surface of the recess 8 is provided with the elastic member 15b.

As illustrated in FIG. 9, the case body 11 accommodates the substrate 2, the sensor unit 3, the mirror 4, and the imaging unit 5.

The sensor unit 3 includes a rectangular sensor substrate 31 and a pyroelectric infrared sensor 32 mounted on the rectangular sensor substrate 31. As illustrated in FIG 6, the front wall 11c has a rear surface provided with a pair of clamping pieces 11g having elasticity. The infrared sensor 32 is clamped between the clamping pieces 11g, thereby attaching the sensor unit 3 to the case body 11.

As illustrated in FIG. 9, the infrared sensor 32 has a detection surface disposed upward to face a lower end of the opening 11e. The rear surface of the front wall 11e is provided with a rib 11h having a plate shape and having an inclined surface on a rear side of the opening 11e. The rib 11h faces the detection surface of the infrared sensor 32 in the upward and downward direction, and the mirror 4 is disposed on the inclined surface of the rib 11h. That is, the detection surface of the infrared sensor 32 faces the mirror 4. Infrared rays coming through the infrared filter 12c and the openings 121 and 11e are reflected on the mirror 4 and enters the detection surface of the infrared sensor 32.

The infrared sensor 32 outputs an electric signal (detection signal) according to the amount of entrance of the infrared rays. The sensor substrate 31 is electrically connected to the substrate 2 via a signal line. Thus, a detection signal of the infrared sensor 32 is input to a control circuit disposed in the substrate 2 via the sensor substrate 31. In the control circuit, when the presence of an object (a person in this embodiment) is determined based on the detection signal, data of an image captured by the imaging unit 5 is transmitted by a wireless signal from the wireless communication circuit.

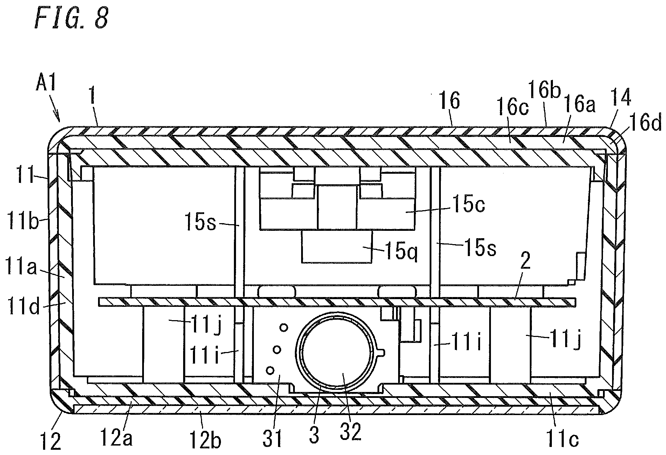

Moreover, as illustrated in FIG. 8, the rear surface of the front wall 11c has a plurality of ribs 11i having a pillar shape. The substrate 2 is disposed in the case body 11 with the front surface of the substrate 2 being in contact with a tip (rear end) of each of the plurality of ribs 11i. As illustrated in FIG. 9, the imaging unit 5 is mounted on the front surface of the substrate 2. The imaging unit 5 can capture an image at the front through the openings 11f and 122 and the light transmissive cover 12b.

As illustrated in FIG. 8, the rear surface of the front wall 11c is provided with a pair of bosses 11j having a columnar shape. The substrate 2 has holes 2a (see FIG. 6) at locations facing respective tips (rear ends) of the bosses 11j. Surfaces of the tips (rear ends) of the bosses 11j have screw holes along the axial direction. The battery accommodation section 15c of the cover body 15 has a bottom surface having a pair of through holes. Screws 103 inserted from the back through the pair of through holes pass through the pair of holes 2a in the substrate 2 and are screwed into the respective screw holes in the bosses 11j, thereby attaching the cover body 15 to the case body 11.

As illustrated in FIGS. 6 and 8, the front surface of the core member 15a of the cover body 15 is provided with a plurality of ribs 15s having a pillar shape. When the cover body 15 is attached to the rear surface of the case body 11, the substrate 2 is accommodated in the case body 11 with the rear surface of the substrate 2 being in contact with a tip (front end) of each of the plurality of ribs 15s.

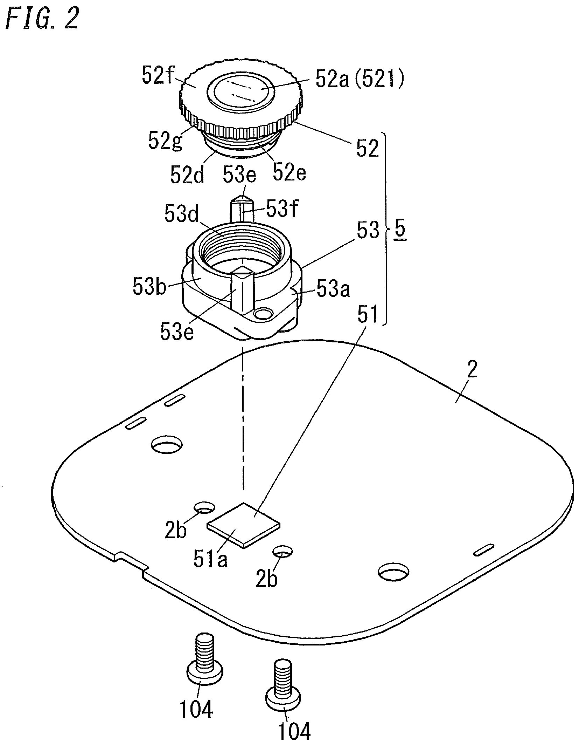

The imaging unit 5 will be described in detail below. As illustrated in FIGS. 1A, 1B, and 2, the imaging unit 5 includes the imaging element 51, the lens unit 52, and the holder 53.

The imaging element 51 is, for example, a solid state imaging device such as a CCD image sensor, a complementary MOS (CMOS) image sensor, or the like. The imaging element 51 is mounted on the front surface of the substrate 2 with the light receiving surface 51a facing forward (upward in FIG. 2). The imaging element 51 is electrically connected to an electrode on the substrate 2 by, for example, wire bonding or flip-chip bonding. Thus, the imaging element 51 is electrically connected to a wireless communication circuit disposed on the substrate 2 via the electrode. The imaging element 51 captures an image by converting an optical image formed on the light receiving surface 51a into an electric signal. Image data obtained by capturing the image is transmitted to the wireless communication circuit as necessary.

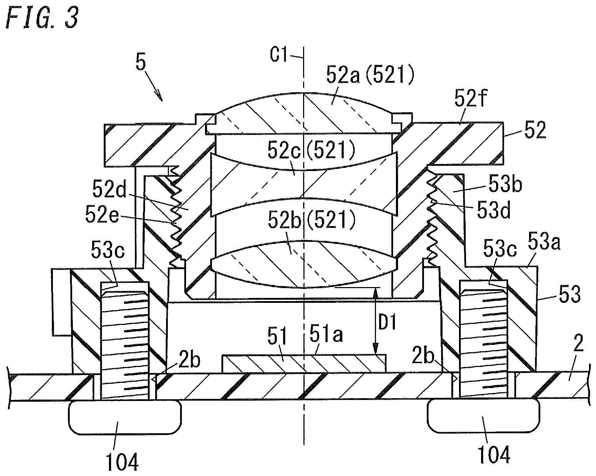

The lens unit 52 includes one or a plurality of optical lenses 521. In the imaging device A1 of the present embodiment, as illustrated in FIG. 3, the lens unit 52 includes the two convex lenses 52a and 52b and the one concave lens 52c, that is, a total of three optical lenses 521. The lens unit 52 may include one or two optical lenses 521 or may include more than three optical lenses 521. The optical lenses 521 receive light from the outside and concentrate rays of the light onto the light receiving surface 51a of the imaging element 51. The optical lenses 521 define a range in which the imaging element 51 captures an image.

The lens unit 52 includes a shaft section 52d having a cylindrical shape. The shaft section 52d has an outer periphery having the bolt thread (second screw structure) 52e to be engaged with the nut thread (first screw structure) 53d of the holder 53 which will be described later. The shaft section 52d holds the optical lenses 521 such that the convex lens 52a, the concave lens 52c, and the convex lens 52b are arranged in this order from the front (the upper part in FIG. 3) to the back (the lower part in FIG. 3) in the shaft section 52d. The shaft section 52d holds the optical lenses 521 with the optical axes of the optical lenses 521 coinciding with each other. The convex lens 52a of the optical lenses 521 which is at a frontmost location is exposed from the shaft section 52d to be able to receive light from the outside.

The shaft section 52d has a front end peripheral edge integrally formed with the gear 52f having a disk shape. The gear 52f has a circumference entirely provided with a plurality of triangular teeth 52g at regular intervals. The gear 52f is configured to rotate along a flat surface orthogonal to the axial direction (forward and rearward direction) of the shaft section 52d as the shaft section 52d rotates.

The holder 53 includes a main part 53a and a cylindrical section 53b. The main part 53a is fixed to the substrate 2 and has the shape of a rectangular parallelepiped. The holder 53 has a cylindrical section 53b formed integrally with the main part 53a. The main part 53a has a hollow in its interior. In the hollow, the imaging element 51 is disposed with the main part 53a being fixed to the substrate 2.

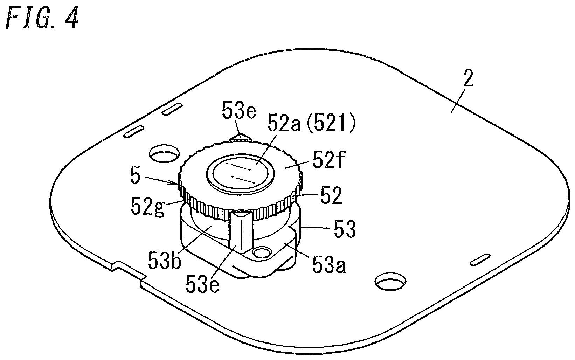

As illustrated in FIG. 3, the main part 53a has a rear surface (a lower surface in FIG. 3) having a pair of screw holes 53c formed along the forward and rearward direction (the upward and downward direction in FIG. 3). The screw holes 53c are used to fix the holder 53 to the substrate 2. That is, through holes 2b penetrating through the substrate 2 in the forward and rearward direction are formed on opposing sides of the imaging element 51. As illustrated in FIG. 2, screws 104 are inserted from the back side of the substrate 2 (lower side in FIG. 2) through the through holes 2b and are screwed into the screw holes 53c in the main part 53a, thereby fixing the main part 53a (i.e., the holder 53) to the substrate 2 (see FIGS. 3 and 4).

The tubular section 53b has an inner diameter slightly larger than the outer diameter of the shaft section 52d of the lens unit 52. The inner peripheral surface of the tubular section 53b has the nut thread 53d which engages with the bolt thread 52e of the shaft section 52d. Thus, the bolt thread 52e and the nut thread 53d are engaged with each other to hold the shaft section 52d of the lens unit 52 by the tubular section 53b of the holder 53. In other words, the lens unit 52 is held by the holder 53 by engaging the first screw structure (nut thread 53d) and the second screw structure (bolt thread 52e) with each other.

As illustrated in FIG. 3, the optical lenses 521 are positioned such that the optical axes C1 of the optical lenses 521 pass the center of the imaging element 51 with the lens unit 52 being held by the holder 53. Thus, the optical lenses 521 face the light receiving surface 51a of the imaging element 51. That is, the holder 53 holds the lens unit 52 with the optical lenses 521 facing the light receiving surface 51a.

The holder 53 further includes the pair of ribs 53e having a triangular prism shape (see FIGS. 1A and 1B). The pair of ribs 53e is integrally formed with the main part 53a to protrude forward from the front surface of the main part 53a. The ribs 53e are disposed on opposing sides of the tubular section 53b. Thus, in a state where the lens unit 52 is held by the holder 53, the ribs 53e which are paired are disposed on opposing sides of the gear 52f on a flat surface (flat surface orthogonal to the axial direction of the shaft section 52d).

As illustrated in FIGS. 1A and 1B, each of the pair of the ribs 53e has a surface which faces the tubular section 53b and which is provided with the protrusion 53f protruding toward the tubular section 53b. The protrusion 53f is located between a tooth 52g and a tooth 52g of the gear 52f with the lens unit 52 being held by the holder 53. The protrusion 53f engages with the gear 52f to function as a stopper which restricts the rotation of the gear 52f.

In the imaging device A1 of the present embodiment, the imaging unit 5 has a function of adjusting the distance D1 (see FIG. 3) between a set of the optical lenses 521 and the light receiving surface 51a so that the light receiving surface 51a of the imaging element 51 is located at the focal point of the set of the optical lenses 521. That is, the imaging unit 5 has a function of adjusting the location of the optical lenses 521. The function will be described below.

For example, the location of the optical lens 521 is adjusted by an operator while producing the imaging device A1. This is because due to variations of the location of the optical lenses 521 held by the lens unit 52 during the production of the imaging device A1, the location of the optical lenses 521 has to be adjusted by the operator with reference to an image captured by the imaging element 51 or a signal of image data output from the imaging element 51.

When an operator rotates the gear 52f clockwise, the lens unit 52 moves rearward (downward in FIG. 3) while the bolt thread 52e of the shaft section 52d of the lens unit 52 engages with the nut thread 53d of the tubular section 53b of the holder 53. Thus, the distance D1 decreases. When an operator rotates the gear 52f anticlockwise, the lens unit 52 moves forward (upward in FIG. 3) while the bolt thread 52e of the shaft section 52d of the lens unit 52 engages with the nut thread 53d of the tubular section 53b of the holder 53. Thus, the distance D1 increases.

That is, the lens unit 52 is configured to change the location of the lens unit 52 with respect to the imaging element 51 along the direction of the optical axes C1 of the optical lenses 521 as the gear 52f rotates. Note that the lens unit 52 may be configured to move forward when the gear 52f is rotated clockwise and to move rearward when the gear 52 is rotated anticlockwise.

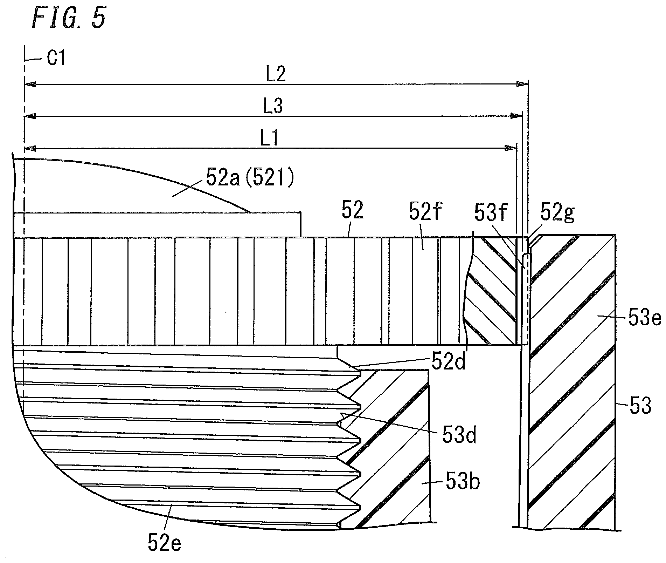

In the imaging device A1 of the present embodiment, each of the teeth 52g of the gear 52f and the protrusion 53f has the following distance relationship. That is, as illustrated in FIG. 5, the optical axes C1 coincide with the rotary shaft (shaft of the shaft section 52d) of the gear 52f. The distance L1 from the bottom between the tooth 52g and the tooth 52g of the gear 52f to the optical axes C1 is shorter than the distance L3 from the tip of the protrusion 53f to the optical axes C1. Moreover, the distance L3 is shorter than the distance L2 from the tip of each tooth 52g of the gear 52f to the optical axes C1.

Thus, when force more than or equal to definite force is not applied to the gear 52f clockwise or anticlockwise, the protrusion 53f functions as a stopper which restricts the rotation of the gear 52f. When the force more than or equal to the definite force is applied to the gear 52f clockwise or anticlockwise, the tooth 52g of the gear 52f pushes the protrusion 53f to warp the protrusion 53f, so that the tooth 52g climes over the protrusion 53f. Thus, the gear 52f rotates clockwise or anticlockwise. That is, as long as force more than or equal to the definite force is not applied to the gear 52f with an intention to rotate the gear 52f, the rotation of the gear 52f is restricted.

In a known structure, the optical lens is fixed to the holder with an adhesive agent to fix the optical lens at the location after the adjustment. However, in this method, the optical lens is not fixed until the adhesive agent cures, and therefore, a time is required to adjust the location of the optical lens. Moreover, in this method, the location of the optical lens may be shifted before the adhesive agent cures. Moreover, in this method, the adhesive agent may stain the optical lens, and application of the adhesive agent is difficult. As described above, according to this method, adjustment of the location of the optical lens is difficult for an operator. Moreover, this method requires an additional component, that is, an adhesive agent to adjust the location of the optical lens.

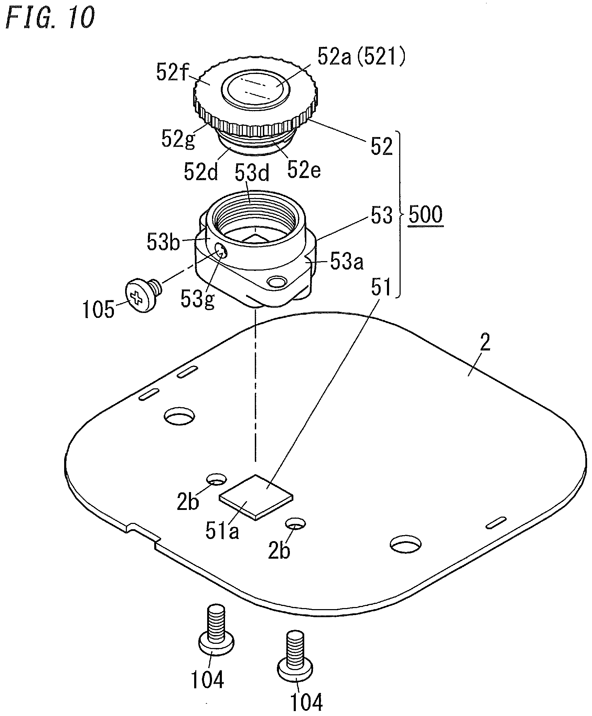

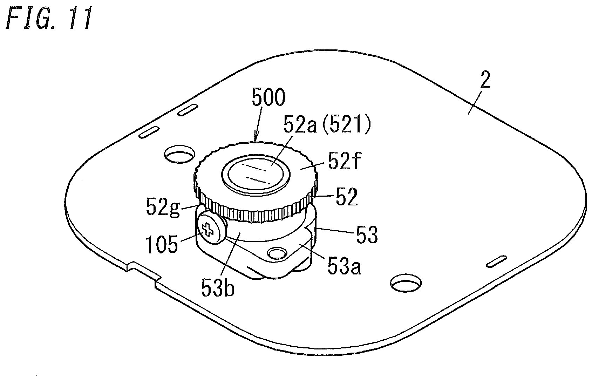

Alternatively, in order to fix the optical lens at the location after the adjustment, for example, an imaging unit 500 of a comparative example shown in FIGS. 10 and 11 may be adopted. The imaging unit 500 of the comparative example is the same as the imaging unit 5 of the present embodiment except that the pair of ribs 53e is not provided, but instead, a through hole 53g is formed in the tubular section 53b. In the imaging unit 500 of the comparative example, after adjusting the location of the optical lens 521, an operator inserts a screw 105 through the through hole 53g and tightens the screw 105. Thus, the tip of the screw 105 pushes the shaft section 52d of the lens unit 52, the lens unit 52 is fixed to the holder 53, and the optical lens 521 is fixed at the location after the adjustment.

However, in the imaging unit 500 of the comparative example, the optical lens 521 is not fixed at the location after the adjustment if the screw 105 is not tightened, and therefore, a time is required to adjust the location of the optical lens 521. Moreover, tightening the screw 105 may shift the location of the optical lens 521. Furthermore, a tool such as a screwdriver is required to tighten the screw 105.

In contrast, in the imaging device A1 of the present embodiment, the holder 53 has the protrusion 53f which engages with the gear 52f to restrict the rotation of the gear 52f. Thus, in the imaging device A1 of the present embodiment, when an operator removes his or her hand from the gear 52f after adjusting the location of the optical lens 521, the gear 52f is fixed at the location after the adjustment. That is, the imaging device A1 of the present embodiment does not require a process for fixing the optical lens 521 at the location after the adjustment. Therefore, in the imaging device A1 of the present embodiment, the time required to adjust the location of the optical lens 521 can be reduced more than in a case of using an adhesive agent and a case of using the imaging unit 500 of the comparative example. Moreover, in the imaging device A1 of the present embodiment, the gear 52f is fixed when an operator removes his or her hand from the gear 52f, and therefore the location of the optical lens 521 is less likely to be shifted. Furthermore, the imaging device A1 of the present embodiment requires no additional component such as an adhesive agent and requires no tool such as a screwdriver, which facilitates operation to be performed by an operator.

In the imaging device A1 of the present embodiment, the holder 53 includes the rib 53e having the protrusion 53f. Thus, in the imaging device A1 of the present embodiment, it is not necessary to prepare the rib 53e as an additional component, and the imaging device A1 is thus easily assembled. Furthermore, in the imaging device A1 of the present embodiment, the rib 53e is integrally formed with the holder 53, and therefore, the distance between the protrusion 53f and the center shaft (i.e., the optical axes C1 of the optical lenses 521) of the holder 53 is fixed. Thus, in the imaging device A1 of the present embodiment, the distances L1 to L3 between the tooth 52g of the gear 52f and the protrusion 53f can be determined more accurately than in a case where the rib 53e is provided as a member separated from the holder 53.

In the imaging device A1 of the present embodiment, the tooth 52g of the gear 52f climes over the protrusions 53f and 53e to rotate, and therefore, click feeling is provided each time the gear 52f rotates by one pitch. Thus, it is easy for an operator to grasp the degree by which the gear 52f is rotated and to adjust the location of the optical lens 521.

In the imaging device A1 of the present embodiment, the rib 53e includes two ribs 53e which are paired. The ribs 53e are provided on opposing sides of the gear 52f on a flat surface (flat surface orthogonal to the axial direction of the shaft section 52d). With this configuration, the two protrusions 53f provided to the respective ribs 53e in the pair engage with the gear 52f. Thus, the lens unit 52 can be more firmly fixed to the holder 53. That is, with this configuration, it is possible to more reliably fix the optical lenses 521 at the locations after the adjustment. Moreover, with this configuration, even when one protrusion 53f of the pair of protrusions 53f fails to engage with the gear 52f, it is possible to fix the lens unit 52 to the holder 53 as long as the other protrusion 53f of the pair of protrusions 53f engages with the gear 52f. That is, with this configuration, each of the two protrusions 53f serves as backup of a function of fixing the lens unit 52 to the holder 53. Note that it is optional to adopt this configuration.

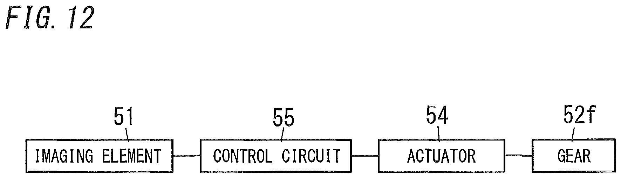

In the imaging device A1 of the present embodiment, an operator manually rotates the gear 52f to adjust the location of the optical lens 521, but other configuration may be adopted. For example, as illustrated in FIG. 12, the imaging device A1 of the present embodiment may include an actuator 54 configured to rotate the gear 52f and a control circuit 55 configured to control the actuator 54. The control circuit 55 may be configured to control the actuator 54 to automatically rotate the gear 52f based on an image captured by the imaging element 51 or a signal of image data output from the imaging element 51. With this configuration, the time required to adjust the location of the optical lens 521 can be reduced more than in a case where an operator manually rotates the gear 52f. Note that a control circuit disposed in the substrate 2 may also serve as the control circuit 55.

In the imaging device A1 of the present embodiment, the first screw structure which the holder 53 has is the nut thread 53d, and the second screw structure which the lens unit 52 has is the bolt thread 52e, but other configurations may be adopted. For example, the first screw structure may be configured as the bolt thread, and the second screw structure may be configured as the nut thread.

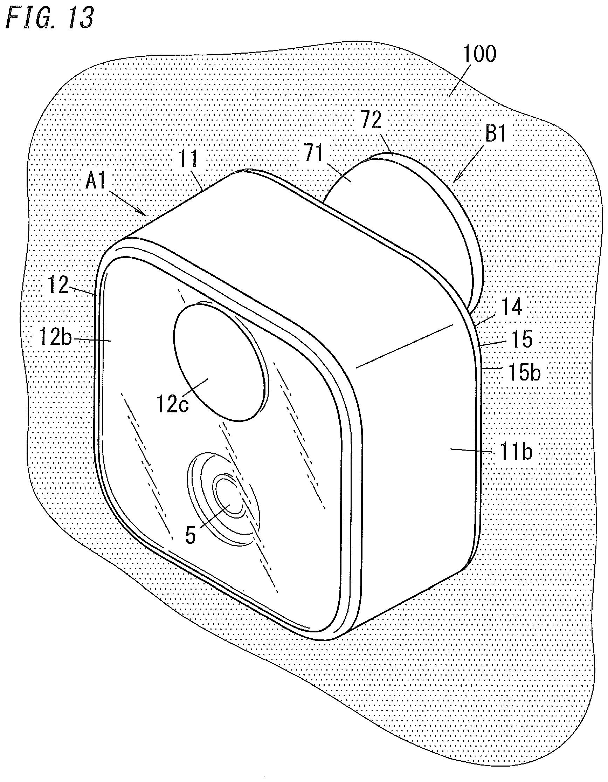

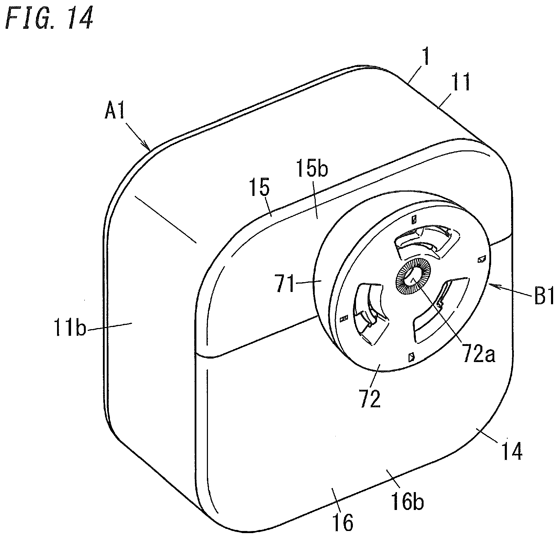

As illustrated in FIGS. 13 and 14, the imaging device A1 of the present embodiment is configured to be detachably held by a holder member B1. The holder member B1 will be described below. The holder member B1 has a hollow hemispherical shape and includes a hemispherical connector 71 and a disk-shaped base 72.

The connector 71 has a hemispherical cup shape and is made of iron. The connector 71 is required only to have magnetism (preferably ferromagnetism) and may be made of a magnetic body other than iron. The base 72 has a through hole 72a at a location deviated from the center of the base 72. A screw is inserted from the front through the through hole 72a, and the screw is screwed into a structure surface 100 such as a wall surface, thereby fixing the base 72 to the structure surface 100.

The connector 71 has a structure which is to be detachably attached to the base 72. That is, the connector 71 and the base 72 include engaging sections which engage with each other. The connector 71 in the first direction (in this embodiment, clockwise) is rotated with the connector 71 being in contact with the base 72 fixed to the structure surface 100, thereby causing the engaging section of the connector 71 to engage with the engaging section of the base 72 so as to attach the connector 71 to the base 72. In contrast, rotating the connector 71 in the second direction (in this embodiment, anticlockwise) releases the engagement between the connector 71 and the base 72 to detach the connector 71 from the base 72.

Next, a holding structure of holding the imaging device A1 of the present embodiment by the holder member B1 will be described. In this embodiment, it is assumed that the base 72 is fixed to the structure surface 100. Moreover, in this embodiment, it is assumed that the connector 71 is attached to the base 72.

When the recess 8 (see FIG. 9) formed in the rear surface of the housing 1 of the imaging device A1 is brought close to the connector 71 of the holder member B1, the housing 1 is attracted to the connector 71 having magnetism due to the magnetic force of the magnet unit 6, and the recess 8 comes into contact with the connector 71. Hereafter, the housing 1 is held by the connector 71 having magnetism due to the magnetic force of the magnet unit 6. When the image capturing direction of the imaging unit 5 of the imaging device A1 or the detection direction of the infrared sensor 32 is changed, a user applies rotational force to the housing 1 with the housing 1 being held by the holder member B1. Thus, the housing 1 rotates with the recess 8 being in contact with the connector 71, which enables adjustment of the attachment direction of the housing 1 with respect to the structure surface 100.

Thus, in the imaging device A1 of the present embodiment, the housing 1 is held by the holder member B1 due to the magnetic force, and therefore, complicated processes are not required to adjust the attachment direction of the housing 1, and the attachment direction of the housing 1 with respect to the structure surface 100 can be easily adjusted.

As described above, the imaging device A1 of the present embodiment further includes the housing 1 accommodating the substrate 2, the imaging element 51, the lens unit 52, and the holder 53. The housing 1 is configured to be fixed to the structure surface 100. In this embodiment, the housing 1 is to be fixed to the structure surface 100 via the holder member B1. That is, the imaging device A1 of the present embodiment is more preferably used in stationary imaging devices such as imaging devices installed in, for example, slaves of a door phone than in portable imaging devices. Note that it is optional to adopt this configuration.

As can be seen from the above-described embodiment, the imaging device (A1) according to a first aspect of the present invention includes a substrate (2), an imaging element (51), a lens unit (52), and a holder (53). The imaging element (51) is mounted on the substrate (2) and is configured to convert an optical image formed on a light receiving surface (51a) of the imaging element (51) into an electric signal. The lens unit (52) includes optical lenses (521) configured to concentrate rays of light onto the light receiving surface (51a). The holder (53) is fixed to the substrate (2) and holds the lens unit (52) with the optical lenses (521) facing the light receiving surface (51a). The lens unit (52) includes a second screw structure (bolt thread) (52e) and a gear (52f). The second screw structure (52e) is engaged with a first screw structure (nut thread) (53d) of the holder (53) and is disposed with an axial direction of the second screw structure (52e) coinciding with a direction of optical axes (C1) of the optical lenses (521). The gear (52f) is configured to rotate along a flat surface orthogonal to the axial direction to change the location of the second screw structure (52e) with respect to the first screw structure (53d). The lens unit (52) is configured to change the location of the lens unit (52) along the direction of the optical axes (C1) with respect to the imaging element (51) as the gear (52f) rotates. The holder (53) integrally includes a rib (53e) having a protrusion (53f) which engages with the gear (52f) to restrict rotation of the gear (52f).

In an imaging device (A1) according to a second aspect of the present invention referring to the first aspect, the protrusion (53f) is configured to function as a stopper which restricts the rotation of the gear (52f) when no force larger than or equal to prescribed force is clockwise or anticlockwise applied to the gear (52f).

In an imaging device (A1) according to a third aspect of the present invention referring to the second aspect, the optical axes (C1) coincide with a rotary shaft of the gear (52f). In the flat surface, a distance (L3) from a top of the protrusion (53f) to the optical axes (C1) is determined as described below. The distance (L3) is longer than a distance (L1) from a bottom between teeth (52g) of the gear (52f) to the optical axes (C1) and is shorter than a distance (L2) from a top of each tooth (52g) of the gear (52f) to the optical axes (C1).

In an imaging device (A1) according to a fourth aspect of the present invention referring to any one of the first to third aspects, the rib (53e) includes two ribs which are paired. The ribs (53e) are disposed on opposing sides of the gear (52f) on the flat surface.

An imaging device (A1) according to a fifth aspect of the present invention referring to any one of the first to fourth aspects further includes an actuator (54) configured to rotate the gear (52f) and a control circuit (55) configured to control the actuator (54). The control circuit (55) is configured to control the actuator (54) to automatically rotate the gear (52f) based on an image captured by the imaging element (51) or a signal of image data output from the imaging element (51).

An imaging device (A1) according to a sixth aspect of the present invention referring to any one of the first to fifth aspects further includes a housing (1) which accommodates at least the substrate (2), the imaging element (51), the lens unit (52), and the holder (53). The housing (1) is to be fixed to a structure surface (100).

The imaging device (A1) enables a reduction in time required to adjust the location of the optical lenses (521).

### Reference Signs List

- 1: Housing
- 2: Substrate
- 51: Imaging Element
- 51a: Light Receiving Surface
- 52: Lens Unit
- 52e: Bolt Thread
- 52f: Gear
- 52g: Tooth
- 521: Optical Lens
- 53: Holder
- 53d: Nut Thread
- 53e: Rib
- 53f: Protrusion
- 54: Actuator
- 55: Control Circuit
- A1: Imaging Device
- C1: Optical Axis

## Claims

1. An imaging device, comprising:
a substrate;
an imaging element mounted on the substrate and configured to convert an optical image formed on a light receiving surface of the imaging element into an electric signal;
a lens unit including an optical lens configured to concentrate rays of light onto the light receiving surface; and
a holder fixed to the substrate and holding the lens unit with the optical lens facing the light receiving surface, wherein
the lens unit includes
a second screw structure engaged with a first screw structure of the holder and disposed with an axial direction of the second screw structure coinciding with an optical axis direction of the optical lens and
a gear configured to rotate along a flat surface orthogonal to the axial direction to change a location of the second screw structure with respect to the first screw structure,
the lens unit is configured to change a location of the lens unit along the optical axis direction with respect to the imaging element as the gear rotates, and
the holder integrally includes a rib having a protrusion which engages with the gear to restrict rotation of the gear.

2. The imaging device according to claim 1, wherein
the protrusion is configured to function as a stopper which restricts the rotation of the gear when no force larger than or equal to prescribed force is clockwise or anticlockwise applied to the gear.

3. The imaging device according to claim 2, wherein
the optical axis is coincide with a rotary shaft of the gear, and
in the flat surface, a distance from a top of the protrusion to the optical axis is longer than a distance from a bottom between teeth of the gear to the optical axis and is shorter than a distance from a top of each tooth of the gear to the optical axis.

4. The imaging device according to any one of claims 1 to 3, wherein
the rib includes two ribs which are paired, and
the ribs are disposed on opposing sides of the gear on the flat surface.

5. The imaging device according to any one of claims 1 to 4, further comprising:
an actuator configured to rotate the gear; and
a control circuit configured to control the actuator, wherein
the control circuit is configured to control the actuator to automatically rotate the gear based on an image captured by the imaging element or a signal of image data output from the imaging element.

6. The imaging device according to any one of claims 1 to 5, further comprising a housing which accommodates at least the substrate, the imaging element, the lens unit, and the holder, wherein
the housing is to be fixed to a structure surface.
